# EUROPEAN PATENT SPECIFICATION

(11) **EP 2 790 524 B1**
(45) Date of publication and mention of the grant of the patent: **05.09.2018**
(21) Application number: 12857407.6
(22) Date of filing: 14.12.2012
(51) Int. Cl.: A23G 4/18

(54) **LOW DENSITY CHEWING GUM AND METHOD OF MAKING SAME**
KAUGUMMI MIT NIEDRIGER DICHTE UND HERSTELLUNGSVERFAHREN DAFÜR
GOMME À MÂCHER BASSE DENSITÉ ET PROCÉDÉ POUR LA FABRIQUER

(30) Priority: 16.12.2011 US 201161576601 P
(43) Date of publication of application: 22.10.2014
(73) Proprietor: Wm. Wrigley Jr. Company, Chicago, IL 60642 (US)
(72) Inventor: MO, Xiaoqun, Oak Park, IL 60302 (US); SEIELSTAD, Donald A., Frankfort, Illinois 60423 (US); SONG, Joo H., Chicago, Illinois 60605 (US)
(74) Representative: Dehns
(86) International application number: PCT/US2012/069619
(87) International publication number: WO 2013/090653

(56) References cited:
- WO-A1-01/76384
- WO-A1-01/77228
- WO-A1-98/34497
- WO-A2-2007/106182
- JP-A- 53 026 355
- US-A- 4 233 319
- US-A- 4 741 905
- US-A- 4 741 905
- US-A- 5 045 326
- US-A- 5 324 530
- US-A1- 2006 263 475
- US-A1- 2006 263 475
- US-A1- 2007 249 745
- US-A1- 2007 286 927
- US-A1- 2008 280 999
- WEBB ET AL.: 'Modem Methods of Particle Characterization.' MICROMERITICS INSTRUMENT CORPORATION. 1998, XP055154737 Retrieved from the Internet: <URL:http://www.micromeritics.com/Repositor y/Files/Modern_Methods_of_Particle_Characte rization.p df> [retrieved on 2013-02-04]

## Description

### Background of the Invention

The present invention relates to low density chewing gums and methods of manufacturing. More specifically, the present invention relates to an aerated chewing gum and related methods of manufacturing the aerated chewing by injecting supercritical fluid carbon dioxide into a mixing apparatus while compounding the chewing gum product.

Recent product innovations in the chewing gum marketplace indicate that many consumers are seeking new experiences in chewing gum products. New forms, textures and new flavors (including savory, non-sweet flavors) may be appealing to these consumers. Consumers are also seeking additional benefits in their chewing gum products, such as reduced calorie content. Accordingly, new methods of manufacturing chewing gum are desirable in order to provide consumers with unique chewing gum experiences.

Traditional chewing gums comprise a water insoluble portion (essentially the gum base) and a water soluble portion, which consists mostly of bulking agent, such as sugars and or sugar alcohols, which typically constitute 60 to 75 wt. % of the product. In addition to providing sweetness to the product, the bulking agent also softens the initial texture of the product. Other ingredients including flavor, softeners, colors, actives, acids and the like are also considered to be part of the water-soluble portion.

Traditional chewing gums typically have a density of 1.1 to 1.4 g/cc. Such high density products are typically produced by first preparing a gum base, which may contain ten or more different components. The pre-manufactured gum base is then mixed with the water soluble ingredients in a separate mixer. The mixture is then extruded, sheeted, and shaped into individual stick, tab, pellet, or ball shaped pieces.

Previous efforts to reduce the density of chewing gum products have been claimed to produce densities as low as 0.5 g/cc by aerating the composition by applying vacuum or injecting with a gas during or after gum mixing. However, this approach may produce an unsatisfactory aerated product due to small sized cud, that is, remainder after gum is chewed. Furthermore, the aeration/vacuum step adds to the complexity and cost of manufacturing.

One advantage of producing a low density (i.e., aerated) chewing gum is a reduction in calorie content on a per-piece basis. However, the consumer may compensate by consuming more pieces of the product to produce the desired cud size, (that is, a cud size comparable to that provided by traditional gum products), thus negating the calorie reduction benefit. Another common approach to reducing the calorie content of chewing gum is to simply reduce or eliminate the sugar or sugar alcohol bulking agent in the chewing gum. However, this may be unattractive to consumers due to decreased piece size and unacceptable chewing texture (typically excessively hard).

Another advantage of low density (i.e., aerated) chewing gums is a reduction in the per-piece cost of manufacturing since a smaller quantity of ingredients is used. However, the consumer may again be inclined to consume additional pieces to produce the desired cud size, thus increasing his cost and his dissatisfaction with the product

Therefore, it would be useful to have a low density chewing gum with lower calorie content, but with the same amount of chewing gum cud as traditional chewing gum. It would also be useful to have a process that would be capable of creating low density chewing gum.

US2007/0249745 describes chewable foams comprising polyurethane-polyureas. These foams can be used for cleaning the mouth but are not chewing gums.

US4741905 describes chewing gums with a specific density of from about 1.20 to about 1.50 and recommends blending the gum base with a cooked hard candy syrup under controlled cooling so that substantially no air is introduced into the mixture.

WO01/77228 describes a non-styrene butadiene rubber gum base for a non-calorie, non-cariogenic chewing gum. Related Continuation-in-part application US2007/0286927 describes gum pieces with a density of 0.5 to 0.9 g/ml.

WO98/34497 describes gum products having a density of 0.5 to 0.9 g/ml and having a plurality of uniformly distributed voids therein of average diameter of about 0.05 millimeters.

WO01/76384 describes a chewing gum product comprising at least one carbonate or bicarbonate salt and 90 to 99 percent by weight gum base.

### Summary of the Invention

This invention is directed to low density chewing gums and methods of manufacturing. More specifically, the present invention relates to an aerated chewing gum and related methods of manufacturing the aerated chewing by injecting supercritical fluid carbon dioxide (SCF) into a mixing apparatus, such as for example, an extruder, while compounding the chewing gum product. The gum then expands upon exiting the apparatus (e.g., extruder) and rapidly cooling.

The aerated chewing gums of the present invention contain at least 50 wt.% polymers and less than 40% combined of bulking agents and fillers such as sugars, sugar alcohols, dietary fiber, fruit powder, cocoa powder, chocolate flakes, instant coffee powder, ground coffee beans, dried milk powder, cinnamon powder, herb and spice powders, cellulose, calcium carbonate, amorphous silica and talc. In an embodiment, the polymer is a food grade polymer, a hydrophilic polymer, and/or has a glass transition temperature (T_{g}) greater than 30°C. In an embodiment, the polymer may be polyvinyl acetate (PVAc), poly(vinyl acetate-co-vinyl laurate) (PVAVL), or a combination thereof. In an embodiment, the polymer constitutes at least 50% by weight of the chewing gum ingredients. In an embodiment, the aerated chewing gums of the present invention may contain additional ingredients, including lubricants (such as fat, oil, or wax), flavors (free or encapsulated), high intensity sweeteners (free or encapsulated), actives, salts, acids, hydrocolloids, proteins, or combinations thereof. The envelope density of the aerated chewing gum of this invention is less than 0.60g/cc.

In an embodiment of the present invention, the density of the aerated chewing gum of this invention will be less than 0.50 g/cc, less than 0.45 g/cc, less than 0.40 g/cc, or less than 0.35 g/cc. In an embodiment of the present invention, the gum will have a density of greater than 0.20 g/cc.

In an embodiment of the present invention, the chewing gum will be at least partially covered by a coating, such as a pan coating of sugar, sugar alcohol, wax, chocolate, or combinations thereof. Such coatings may be applied, for example, by enrobing or by spraying, the coating material in solution or molten form. Alternatively, a coating layer may be coextruded around the gum mass using a die. However, in the case of the coextruded coating, it is important that the coating material not restrict expansion of the chewing gum center.

The method of the present invention involves introducing the ingredients of the chewing gum into an apparatus (such as for example, an extruder), melting the chewing gum ingredients, introducing supercritical carbon dioxide into the apparatus (i.e., extruder), operating the apparatus to blend the supercritical carbon dioxide with the melted gum ingredients, forming (i.e., extruding) the mixture and cooling the expanded and formed mixture. In an embodiment of the present invention, pieces of the expanded and formed mixture are cut prior to cooling. The pieces may be coated with sugar, sugar alcohol, chocolate, wax or combinations to produce a shell.

In an embodiment of the present invention, the supercritical CO₂ is introduced into the apparatus at a pressure of at least 7000 kPa (1000psi), such as 7000 to 42,000 kPa. The supercritical CO₂ may be introduced at a rate of approximately 0.5 - 2ml of SCF CO₂ per 50 g of ingredient.

### Brief Description of the Drawings

FIGURE 1 shows a photograph of aerated gum balls in accordance with an embodiment of the present invention.
FIGURE 2 shows a photomicrograph of a section of the aerated gum as shown in Figure 1, in accordance with an embodiment of the present invention.
FIGURE 3 shows a schematic of a process in accordance with an embodiment of the present invention.
FIGURE 4 shows a schematic of an injector used in connection with a process in accordance with an embodiment of the present invention.
FIGURE 5 shows the density stability of four examples of aerated gums in accordance with an embodiment of the present invention.

### Description of the Invention

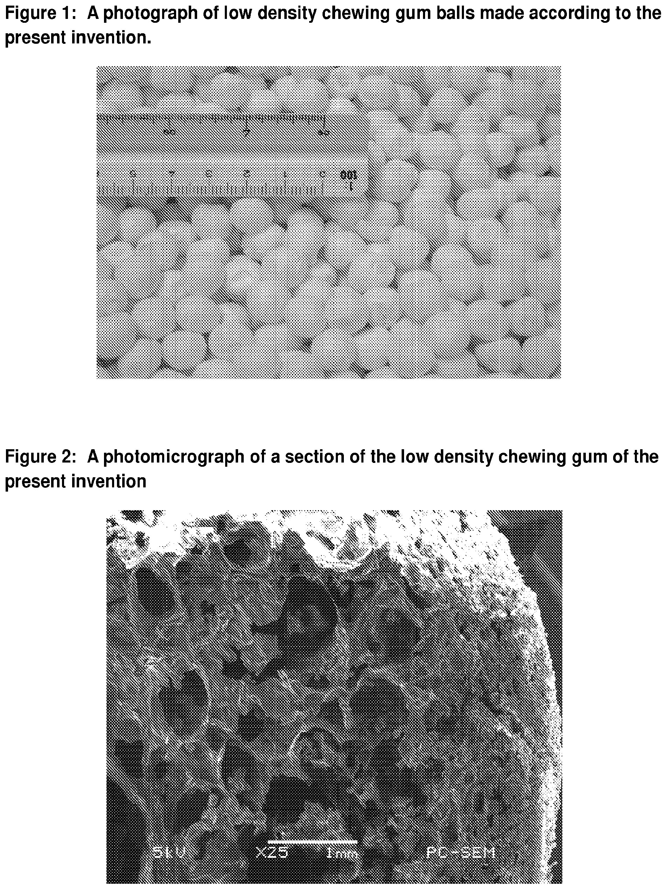

The present invention provides low density chewing gums and methods of manufacturing them. In particular, in accordance with an embodiment of the present invention, the low density chewing gum is an aerated chewing gum. The aerated chewing gums of the present invention may comprise only a polymer, which is expanded through the incorporation of supercritical carbon dioxide fluid (SCF). More typically, the composition may further include at least some of the following ingredients: flavors, bulking agents, fillers, high intensity sweeteners, salts, acids, actives, hydrocolloids, proteins, lubricants and colors. Figure 1 is a picture of aerated gum ball pieces made in accordance with an embodiment of the present invention.

Chewing gums of the present invention will generally have a density in the range of 0.20 to 0.60 g/cc. As used herein, the term density refers to envelope density. Envelope density is the mass of the gum product divided by the exterior dimensions (i.e. broadest spacial volume) of the piece of gum being measured. Whereas, the specific density of a piece of gum would be the mass of the chewing gum piece divided by the exterior volume area minus the interior volume area of any air cells or empty space. If there were no interior air cells or open space, the envelope density would be the same as the specific density. More specifically the envelope density of the chewing gum of the present invention will be in the range of 0.25 to 0.45 g/cc.

A method for measuring the envelope density of the chewing gum of the present invention may be accomplished by placing a weighted quantity of product in a large graduated cylinder and pouring a known volume of fine sand to cover the product. Gently tapping the cylinder until a stable volume reading is obtained and subtracting the known volume of added sand will give a reasonably accurate measure of the volume of the weighed product allowing a direct computation of the envelope density. For purposes of the present invention, it will be understood that the density values used in this document are calculated by this method. Also, the density values refer to the envelope density of the chewing gum only and do not include any coating which may optionally be applied (unless otherwise stated).

Another method calculating the envelope density of chewing gums of the present invention can be roughly estimated by measuring the density of packed gum spheres and multiplying by 1.35. This density value can be measured, for example, by filling a large beaker or graduated cylinder with spherical gum pellets up to a volume graduation and weighing the contained product. Dividing the weight in the cylinder by the volume graduation on the cylinder gives the "packed density". According to the Kepler conjecture (confirmed by proof by exhaustion by Hales in 1998) densely packed spheres fill 74% of the packed volume. Thus the envelope density of a gum sphere may be calculated by determining the "packed density" of a large number of spheres and then multiplying the "packed density" by 1/0.74 = 1.35 to get the envelope density.

For purposes of the present invention, the percentages of ingredients used in the chewing gum are based on the weight of solid and liquid ingredients mixed into the chewing gum composition and do not include the weight of carbon dioxide. The carbon dioxide is mixed with the gum ingredients while it is in a fluid state, but it leaves the chewing gum through evaporation as the gum exits the apparatus, expands, and cools. The percentages also do not include the weight of the ingredients in any coating applied to the surface of the chewing gum after mixing.

As previously suggested, the chewing gums of the present invention comprise a polymer. In accordance with alternate embodiments, additional ingredients may be added. The ingredients may be in solid or liquid form. Furthermore, additional ingredients may be used to form a coating, as further discussed below.

For purposes of the present invention, it will be understood that the term, polymer, refers to thermoplastic polymers of the type commonly used in gum bases and does not include carbohydrate polymers, such as starch or cellulose, which are classified as bulking agents or fillers in the present invention. Nor does it include waxes or other low-molecular weight oligomers, which may be used as additives in the gum. The preferred polymer for use in gums of the present invention will be food grade, hydrophilic and have a T_{g} (glass transition temperature) greater than about 30ºC. Polymers having a T_{g} greater than 30ºC are preferred in the present invention because they are more likely to retain their expanded structure after manufacturing. It is preferred that the polymer be hydrophilic so that the polymer will quickly absorb saliva during chewing to retain cud volume and elasticity. By hydrophilic, it is meant that the polymer has a solubility parameter of greater than 17, greater than 18. or at least about 19 MPa^{1/2}. Of course, small quantities of polymers having a lower solubility parameter can be added to polymers with these solubility parameters without rendering the product unacceptable.

The polymer or polymers used in the present invention may be present at a level of at least 50% by weight of the chewing gum. In an embodiment, the polymers may be present at a level of at least 60 wt. %, or at least 70 wt. %, of the gum composition. In some embodiments, the polymer may comprise virtually all of the gum composition, i.e. virtually 100 wt. % of the ingredients, such as greater than 95 wt. %, greater than 98 wt. %, or greater than 99 wt. %.

One preferred polymer usable in the present invention is polyvinyl acetate (PVAc). The PVAc used in chewing gums of the present invention will desirably have an average molecular weight (M_{w}) of less than 50,000 daltons, less than 40,000 daltons, less than 30,000 daltons, or most preferably less than 15,000 daltons as measured by GPC. The PVAc should have an average molecular weight (M_{w}) of at least 5,000 daltons, at least 7,500 daltons, or preferably at least about 10,000 daltons. It may be beneficial to add a small amount of higher molecular weight PVAc to adjust the texture of the product. PVAc having high molecular weight (M_{w}) of about 45,000-55,000 may be combined with the low molecular weight PVAc of about 10,000 - 15,000 in a ratio of greater than 10:1, 20:1, 40:1, or 100:1 low M_{w} :high M_{w}. A ratio of about 50:1 low M_{w} :high M_{w} is preferred.

Polyvinyl acetate is a relatively hydrophilic polymer having a glass transition (T_{g}) between 35 and 40ºC. PVAc has a solubility parameter of about 19 MPa^{1/2} while most chewing gum elastomers have a solubility parameter of about 16 MPa^{1/2}. During chewing PVAc absorbs water, which will plasticize the polymer. In the early chew time, this effect is to soften the polymer and create elasticity in the chewing gum and gum cud. In the late chew, excessive water absorption by the polymer causes loss of elasticity in the chewing gum (especially in the gum cud). A second polymer may be combined with PVAc to reduce water absorption during chewing. While PVAc polymer may be used as the only polymer in a chewing gum, it is preferred that PVAc be combined with another polymer, such as poly(vinyl acetate-co-vinyl laurate) (PVAVL). Although PVAVL may be used alone to make chewing gum, PVAVL's low water absorption capability limits its ability to create an elastic chewing gum on its own.

When combined with PVAc, PVAVL causes an increase in the elasticity of the chewing gum and cud during chewing by reducing the water absorption of the chewing gum's combined polymer content. The PVAVL increases the hydrophobicity of the PVAc, reducing its water absorption properties. Poly(vinyl acetate-co-laurate), though, has both fatty regions (laurate) (which reduce water adsorption) and vinyl acetate regions (which are attracted to PVAc). Fatty ingredients can also be combined with PVAc to reduce water absorption by PVAc, however, since fat is not miscible with PVAc, it will be extracted from the PVAc matrix during chewing and is thus less desirable for this purpose.

It is important that the PVAVL chemical composition be compatible with the PVAc partnered with it in order to prevent separation of the two materials during processing. The compatibility of the two polymers can be accomplished by increasing the ratio of vinyl acetate to vinyl laurate in the combined polymer mass. An example of a commercially available PVAVL, useful for combination with PVAc, may be obtained from Wacker Chemical Corp. (i.e., Vinnapas LL8880) This PVAVL polymer mass has about 11-13% vinyl laurate content and a weight average molecular weight of 120,000-170,000. Vinnapas products B500/20VL and B500/40VL have vinyl laurate content of 20% and 40% respectively and may be combined with low molecular weight PVAc to make aerated chewing gum. It may be necessary to adjust the ratio of PVAc to PVAVL when combining polymer masses chosen from various suppliers in order to achieve the desired chewing gum and cud elasticity. While PVAc or PVAVL may be used as the sole polymers in the chewing gum of this invention, it is preferred that PVAc:PVAVL be at a ratio of 40:1 to 5:1 PVAc:PVAVL, more preferably at a ratio of 20:1 to 10:1.

While PVAc/PVAVL blends are the preferred polymers for use in the present invention, other polymers and polymer blends may also be used. In general, any polymer, which is miscible with PVAc and which makes a homogeneous phase with PVAc when blended, may work. Preferably, this polymer will be sufficiently elastic by itself to provide sufficient elasticity to the chewing gum product of this invention. It may also be possible to modify PVAc by grafting hydrophobic groups on to the polymer to create a polymer which may be usable by itself or as a blend with non-grafted PVAc. Also a low molecular weight polyethylene may be used in combination with PVAc and PVAc/PVAVL polymer systems.

It is important that the polymers used in chewing gums of the present invention be food grade. While requirements for being food grade vary from country to country, food grade polymers intended for use as masticatory substances (i.e. gum base) will typically have to meet one or more of the following criteria. They may have to be specifically approved by local food regulatory agencies for this purpose. They may have to be manufactured under "Good Manufacturing Practices" (GMPs) which may be defined by local regulatory agencies, such practices ensuring adequate levels of cleanliness and safety for the manufacturing of food materials. Materials (including reagents, catalysts, solvents and antioxidants) used in the manufacture will desirably be food grade (where possible) or at least meet strict standards for quality and purity. The finished product may have to meet minimum standards for quality and the level and nature of any impurities present, including residual monomer content. The manufacturing history of the material may be required to be adequately documented to ensure compliance with the appropriate standards. The manufacturing facility itself may be subject to inspection by governmental regulatory agencies. Again, not all of these standards may apply in all jurisdictions. As used herein, the term "food grade" will mean that the polymers meet all applicable food standards in the locality where the ingredient or the product incorporating it is manufactured and/or sold.

Once the chewing gum mass containing polymer has been expanded during the process of this invention, the resulting low density (i.e., aerated) chewing gum may require some form of stabilization to prevent the expanded gum mass from shrinking and collapsing as (and after) the expanded product cools to room temperature. As with a rubber band, unless there is some means (or treatment) available to keep a stretched rubber band from retracting back to its original size, it will return to its smaller size after being stretched because that is its relaxed, lower energy state. One such means, or treatment, for limiting that tendency to retract may be to add ingredients to the band that would alter the rubber band's chemical state or composition so that it would be at a lower energy state when stretched. A second means, or treatment, would be to add ingredients with the band that would stretch with the band but would not contract once it was stretched. A third means, or treatment, would be to add ingredients with the band that would physically get in the way of the rubber band when the band tried to contract to its original relaxed size.

A first group of stabilization agents that may be added to the chewing gum formula may prevent the aerated gum from collapsing by raising the Tg of the polymers(s) so that the polymer immobilizes upon cooling. In the case of PVAc as the polymer in the gum, expansion occurs at a temperature of around 40 - 60 ºC, slightly above the Tg of the polymer. However, room temperature (22 - 27 ºC) is not cold enough to immobilize the polymer molecules to prevent cold flow, that is, molecules returning to their un-stretched, lower energy state. One way to immobilize the polymer is to incorporate a stabilizing agent that is mobile at high temperatures but immobile at lower temperatures. For example, materials with ionic functional groups display a weak ionic attraction at high temperatures but a strong attraction at lower temperatures, which then reduces the mobility of the polymer and its tendency to collapse after expansion. Of course, such a stabilizing agent must be molecularly compatible with the polymer.

Especially effective stabilizing agents for PVAc are stabilizing agents with strong ionic groups (-OH⁻, NH₃⁺, -COOH⁻, etc.), such as, but not limited to, gum arabic and proteins, such as concentrated whey protein, egg protein, and combinations thereof. As mentioned above, the stabilizing agent will only work if it is molecularly compatible with the polymer. The stabilizing agents need to be able to mix well with PVAc in its melted state. Whey protein concentrate is a preferred stabilizing agent for use in chewing gums containing PVAc. Whey protein concentrate is compatible with PVAc and needs no additional treatment or ingredients before being combined with PVAc during gum manufacturing. In contrast, gum arabic is a good stabilizing agent, though it needs another ingredient, such as glycerin, or sorbitol, in order to get gum arabic in a form that will incorporate with PVAc during gum manufacturing. This combining of ingredients such as glycerin or sorbitol with gum arabic is sometimes called "plasticizing" the gum arabic. Of these two example "plasticizing" ingredients, glycerin is the most effective. Without these plasticizers, the gum arabic remains in an unincorporated powder form during the attempted blending of the gum arabic with the melted PVAc, thus making gum arabic ineffective as a stabilizing agent. If plasticized by incorporation of a glycerin, sorbitol, or similar ingredient, gum arabic is an effective stabilizing agent for PVAc.

In an embodiment of the present invention, the preferred stabilizing agent for PVAc/PVAVL based chewing gums may be a blend of gum arabic and whey protein concentrate (WPC) in ratios of 3:1 to 1:3, or 2:1 to 1:2, or preferably about 1:1. The stabilizing agent may be used at levels of at least 5 wt. %, or at least 10 wt. %, up to about 30 wt. %, or up to 20 wt. %, or preferably about 15 wt. % of the gum composition. Gum arabic also tends to reduce the density of the expanded chewing gum and thus the ratio of gum arabic to whey protein concentrate (WPC) may be adjusted to control product density.

A second group of stabilization agents may be added to the chewing gum formula to help prevent the aerated gum from collapsing by creating a physical support structure within the aerated chewing gum. This group of ingredients is water soluble bulking agents, such as a sugar or sugar alcohol, which stabilize the expanded, aerated gum by crystallizing and/or otherwise forming a non-collapsing physical structure, which interferes with the expanded polymer structure's attempt to collapse. Specific examples of bulking agents that may be useful in stabilizing the expanded gum by this means include sucrose, dextrose, fructose, sorbitol, mannitol, xylitol, erythritol, isomalt, maltitol, pre-gelatinized starch, granular starch, hydrogenated starch hydrolysate solids, corn (dextrose) syrup solids and water-soluble dietary fibers such as pectin or polydextrose. Of these, sorbitol is preferred because it will melt at traditional chewing gum processing temperatures and then re-solidify during post expansion cooling temperatures to provide structural integrity to the expanded gum piece. Starches are also preferred as they also build non-collapsing structures, serve as film-forming agents, and work well in combination with dextrose and fructose. Bulking agents need to be chosen based on energy characteristics also. For example, the use of high percentages of xylitol and other bulking agents which release significant quantities of heat during crystallization should be avoided as this heat of crystallization may collapse the product during the cooling process.

A third group of stabilization agents may be added to the chewing gum formula to help prevent the aerated gum from collapsing by physically blocking the expanded polymer from returning to its un-stretched, relaxed state by its physical bulk. This third group of stabilizing agents is water insoluble fillers such as calcium carbonate, talc and insoluble carbohydrates such as cellulose and insoluble dietary fiber. Some natural food ingredients such as dried fruit, vegetable powder, or cinnamon powder may contain a mixture of bulking agent and filler. These materials may stabilize the expanded gum product by both creating a physical structure by its water soluble bulking agent portion, and by supplying interfering bulk by its water insoluble filler portion.

Where used, bulking agent and/or filler combined will comprise less than 40% of the chewing gum ingredients. As both water soluble bulking agent and insoluble fillers act similarly as to their method of stabilizing expanded chewing gum of the present invention, they will be considered together here. In some embodiments, the gum ingredients will comprise up to 30 wt. %, or up to 20 wt. %, or up to 10 wt. % bulking agent and/or filler. In some embodiments the gum will contain essentially no bulking agent or filler, i.e. less than 1 wt. %. Excessive bulking agent/filler levels may increase torque in the extruder to unacceptable levels and cause the gum to rupture during expansion or to shrink excessively thereafter. The maximum level of bulking agent/filler is partially dependent on the film forming character of the polymer used, and the other added ingredients that affect that polymer character. Film forming characteristics of polymers contribute to their ability to expand and create air cells in the expanded chewing gum. Polymers with strong film forming tendencies can tolerate higher bulking agent/filler levels and still create sufficient expansion of the final aerated chewing gum.

Certain ingredients can be added to the chewing gum of the present invention in order to increase the film forming character of the polymer and thus increase the expansion of the chewing gum. These ingredients include but not limited to, water, glycerin, sugar syrup, sugar alcohol syrup, liquid gum, liquid gum base, liquid flavor, or combinations thereof

The addition of the above fluid ingredients to the chewing gum mass may be done by adding the ingredients at the beginning of the mixing process or, preferably, by injecting small amounts of these fluid ingredients into later mixing sections of the apparatus after most of the ingredients have been mixed, but before the supercritical carbon dioxide is injected into the gum mass. As mentioned, these ingredients increase the film forming character of the polymers, but they can also affect (e.g., lower) the T_{g} of the polymer. If the fluid ingredients lower the T_{g}, the expanded gum might become softer or more flexible upon cooling. Hence, the fluid ingredients are sometimes called "softeners" or "plasticizers". These fluid ingredients may be added at a level of at least 0.5 wt. %, or at least 1 wt.%, or at least 2 wt. %, or at least 3 wt. %, or about 4 wt. %. However, problems such as collapse of the expanded pieces may be encountered if the level of these fluid ingredients exceeds 6 wt. %, or 8 wt. %, or 10 wt. %.

Ingredients included in traditional chewing gum formulas for the purpose of "moisturizing", "softening", and/or "plasticizing" may further be included in the chewing gum of the present invention. The purpose for adding these ingredients to traditional gum is to soften traditional gum cud. Here, with the present invention, these ingredients may be effective in preventing or reducing the perception of dustiness, dryness, or brittleness in the initial bite and early chew of aerated chewing gum. These "moisturizing", "softening", and/or "plasticizing" ingredients include, but are not limited to, water, glycerin, propylene glycol, acetylated mono- and di-glycerides, sugar syrups, sugar alcohol syrups, liquid gum base, liquid flavor, and combinations thereof. As with the fluid ingredients previously discussed, they may be added to the gum mass early in the mixing or later in the mixing, but preferably before the addition of supercritical carbon dioxide.

The use of any of the above fluid ingredients may allow higher levels of bulking agent/filler, but still not over 40 wt. % of the total gum ingredients. Liquid flavor may act similarly to glycerin, water, sugar syrup, or sugar alcohol syrup. However, due to the wide range of interactions between various flavors and base compositions, it may be difficult to predict what level of liquid flavor may be effective or excessive without testing the specific combination. For example fruit flavors tend to more strongly plasticize (i.e., soften) PVAc than do mint flavors, so more bulking agent may be used in chewing gum with fruit flavors than with mint flavors.

In general, the overall expansion ability of the extruded gum mass in the aerated chewing gum can be seen in Figure 2. Figure 2 shows a photomicrograph of a cut section of a piece of the aerated chewing gum shown in Figure 1, in accordance with an embodiment of the present invention. It can be seen in the photomicrograph that the surface of the spherical piece is relatively smooth and non-porous, whereas the interior volume is composed of foam-like open air cells within the gum mass. By relatively non-porous, it is meant that appearance of the surface of the gum piece to the naked eye is substantially free of pores and crevices. The difference in air cell size between the outer surface and the center of the gum piece may be caused by the ability of the center mass to expand more before the mass cooled. The outer surface of the gum piece cools quickly upon exiting the extruder and/or die, therefore the outer surface has less time to expand before it is too cool to expand. In general, the elastic character of the polymer affects how much expansion occurs before the extruded gum cools.

In comparison, traditional chewing gums (that is, non-aerated) have an even density appearance from exterior (i.e., surface) through interior of the piece. Accordingly, there are only a limited number of air cells in the chewing gum piece, the presence of which is caused by air occasionally being trapped during mixing. These occasional air cells are randomly located in the gum piece.

An important factor in stabilizing the aerated chewing gum product is the avoidance of ingredients which may lower the T_{g} of the polymers to near the expected long term storage temperature. If the storage temperature is close to or above the T_{g}, the polymer will soften, lose structural rigidity and collapse over time. As previously discussed, one ingredient which may plasticize the polymer (i.e. lower it's T_{g}) is liquid flavor. For this reason, it is desirable to minimize the level of liquid flavors or preferably omit them entirely. Encapsulated flavors may be used in their place as these will not plasticize the polymers. The term 'encapsulated flavors' as used herein is intended to include not only encapsulations such as those applied by techniques, including fluidized bed coating, but also other methods of immobilizing the flavor, such as spray drying or absorption of flavor onto silica particles or other solid media.

In accordance with another embodiment, further ingredients which may be incorporated into the aerated chewing gums of the present invention are lubricants. Lubricants useful in the invention include waxes and fat materials such as paraffin wax, microcrystalline wax, natural waxes such as beeswax and carnauba wax, fats of animal or vegetable origin such as tallow, hydrogenated tallow, fully and partially hydrogenated vegetable oils for example from soy, corn, cottonseed, rape, palm, palm kernel coconut, sunflower, etc. and combinations thereof. As previously discussed, fatty/oily lubricant ingredients may be added to a formula to reduce water adsorption by PVAc. It is important that the lubricant not lower the T_{g} of the polymer or polymer system, as previously discussed. A lubricant may also be incorporated in a gum formula for several manufacturing efficiency reasons. Among other things, to prevent adhesion of the product to the apparatus, for example the cutting blade used to cut the extruded gum into pieces. The lubricant may also reduce gum viscosity and reduce torque during mixing and supercritical carbon dioxide addition. Another function of lubricants may be to provide barrier properties to protect the finished aerated gum product from moisture in the environment or from subsequent coating operations. One particularly preferred lubricant is carnauba wax. Where used, a lubricant may be incorporated into the chewing gum at a level up to 5 wt. % with levels of at least 0.1 wt. %, or 0.5 wt. % up to 2 wt. %, or up to 3 wt. % being preferred.

In an embodiment, the chewing gum ingredients may further include one or more high intensity sweeteners. As used herein, the term "high intensity sweetener" refers to any substance that is at least twenty times sweeter than sucrose. Such sweeteners include saccharin, cyclamate, aspartame, alitame, neotame, other peptide-based sweeteners, sucralose, acesulfame K, stevia (including purified extracts such as rebaudioside A), glycyrrhizin, neohesperidin dihydrochalcone and mixtures thereof. In some embodiments, at least a portion of the high intensity sweetener will be encapsulated. Such encapsulations may be produced by granulation, agglomeration, extrusion and grinding, spray drying, fluid bed encapsulation or any other known means. Usage levels will depend on the potency of the sweetener, degree and effectiveness of the encapsulation (if any) as well as the sensory profile desired for the product. Generally, the sweetener will be used at levels as low as 0.005 wt. %, or as low as 0.05 wt. %, or at least 0.2 wt. % to as high 5 wt. %, or 3 wt. %, or 2 wt. % in the chewing gum composition. In an embodiment, the high intensity sweetener will be present at a level of 0.1 wt. % to 1.0 wt. % of the chewing gum ingredients. In some embodiments, the chewing gum product may further include flavors, including fruit and/or savory flavors. In the case of savory flavors, such as popcorn, cheese, beef jerky, bacon or potato chip flavors, it may be desirable to include salt in the formula. Salt may be added as part of the flavor profile and/or added to reduce the perception of sweetness of bulking agents in the gum formula. In the case of fruit flavored gums, up to 3 wt. % of an acid such as citric acid, malic acid or adipic acid may be added for tartness and flavor enhancement. If the flavors are liquid, their carrier ingredients need to be considered. For example, as previously described, if the flavors are in a fat based carrier, the flavors could affect both the water absorption of the polymer and the Tg of the polymer.

Other ingredients which may be incorporated into the chewing gum of the present invention include colors (natural and/or artificial) and active ingredients, such as dental health agents, pharmaceutical compounds, nutritional and energy supplements. Of course, adding any ingredient to the formulation will require verification that the stability of the product is not adversely affected.

The present invention also includes methods of manufacturing a low density (i.e., aerated) chewing gum. The method include the steps of: 1) introducing dry ingredient materials comprising at least a polymer into an apparatus (which is or can include an extruder); 2) mixing and melting the chewing gum materials; 3) introducing (e.g., injecting) supercritical carbon dioxide into the apparatus; 4) mixing the supercritical carbon dioxide with the mixed and melted chewing gum materials; 5) depositing the chewing gum mixture out of the apparatus; 6) forming the chewing gum mass into a rope, ribbon, or sheet as it exits the apparatus through a shape former (e.g., die plate section); 7) allowing the chewing gum mass to expand due to decrease in pressure; and 8) cooling the expanded, formed chewing gum material to produce a low-density (i.e., aerated) chewing gum. In an embodiment the formed product may be cut into pieces, for example by using a fly knife positioned immediately after the extrusion die. For some embodiments the product may be deposited or placed into a mold such as a pair of counter rotating rolls with cavities in order to shape the expanding product.

In an embodiment, the method for manufacturing the low density (i.e., aerated) gum further includes the step of coating the low density chewing gum. One such method is achieved by coating the low density chewing gum pieces with a sugar, sugar alcohol wax, chocolate, or combinations thereof. Such coatings may be applied, for example, by enrobing low density chewing gum pieces with a molten coating or by spraying or atomizing the coating material in its solution or molten form. In some embodiments the chewing gum product may be sprayed with liquid ingredients, dusted with dry ingredients, or combinations thereof. The applied ingredients may include, but are not limited to, salts, acids, wax or savory flavored oil.

In another embodiment, the method of coating the low density chewing gum may be done using coextrusion. A coating layer may be coextruded, on, around or with the gum mass using a concentric or laminar die plate. The coextruded layers may be of the same or different densities and material content. However, with the creation of a coextruded coating, it is important that the coating material not restrict expansion of the chewing gum portion. The coatings surrounding the chewing gum can be applied to the chewing gum before, during, or after expansion of the chewing gum

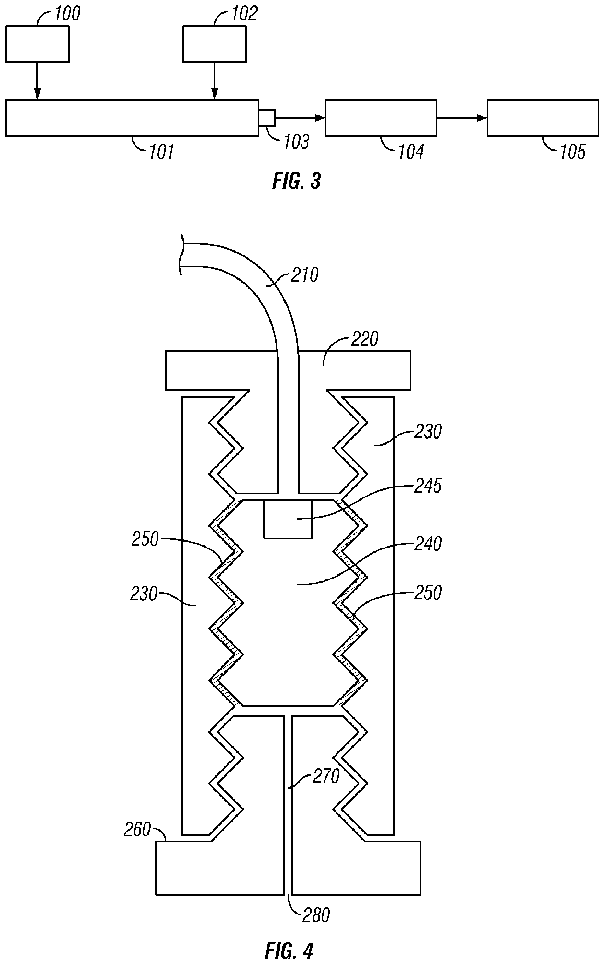

Figure 3 shows a schematic of process in accordance with an embodiment of the present invention. The process includes the steps of: 1) premixing (100) chewing gum ingredients, including polymer, together to form a premix and adding the premix into an apparatus; 2) mixing and melting (101) the ingredients in the apparatus; 3) injecting (102) supercritical carbon dioxide into the apparatus and mixing CO₂ with the ingredients to form a gum mass mixture; 4) forcing (103) the mixture out of apparatus through a shape former (e.g., extruder die plate section) to form the gum piece; 5) cooling (104) the expanded gum piece; and 6) coating (105) the expanded gum piece.

The apparatus used to make the aerated gum in accordance with the present invention, may be an extruder with a single screw, twin screw, or pin and blade design. Preferred extruders include twin-screw extruders manufactured by Leistritz Extrusionstechnik GMBH of Nuremburg, Germany, Coperion GmbH (formerly Werner & Pfleiderer, W&P) of Stuttgart, Germany and Krauss Maffei Berstorff, Hanova, Germany. Typically, the extruder may be configured to allow introduction of one or more ingredients (in liquid or dry form) into at least one port and have a screw or pin and blade configuration, which effectively mixes and conveys the ingredients, while filling and sealing the extruder to prevent loss of CO₂.

Ingredients may be typically metered into the extruder using loss-in-weight feeders or other mechanisms for ensuring consistent feeding of the ingredients in the proper proportions. Such feeders may discharge directly into the inlet port(s) of the extruder or they may deposit the ingredient onto a trough, belt or other conveyor means which transfers the ingredients into the inlet port(s). It may be desirable in some cases to pre-blend dry ingredients to simplify the feeding process.

In an embodiment of the present invention, the apparatus for producing low density chewing gums includes an extruder with a section and/or port for introducing dry materials early in the process, and a section and/or port for introducing liquid materials into the apparatus after the addition of dry materials.

In an embodiment of the present invention, the apparatus, (e.g., extruder) will have a sealed SCF injection point downstream from the dry and liquid ingredient addition sections/ports that allows adding (e.g., injecting) the supercritical carbon dioxide into the extruder. The SCF injection point may correspond with mixing (or reverse) elements located on the extruder shaft, which is effective to mix and dissolve the SCF into the mixed chewing gum ingredients. In one embodiment of the invention, the SCF injection is controlled through the use of injection controller as shown in Figure 4, which will be discussed in more detail below.

In an embodiment of the present invention, additional screw elements may be added to the discharge end of the apparatus (e.g. extruder). The additional screw elements may be added to create back pressure at a transfer point between the extruder and the die plate to prevent leakage of the carbon dioxide from the extruder. Moreover, the additional screw elements further ensure complete mixing of the supercritical carbon dioxide with the melted chewing gum ingredient mass. Alternative screw configurations may also be effective.

In an embodiment of the present invention, a shape former, such as an extrusion die plate section, may be attached to the discharge end of the apparatus (e.g., extruder) that may assist in creating back pressure and in controlling the diameter and shape of the extruded mass upon exiting the die plate. The preferred extrusion die plate section will have two sub-sections; a conical section which allows the mixture to readily flow without dead spots, followed by a narrow cylindrical length to create back pressure and improve cutting at the exit opening. The die plate section may have a means of spraying fluid ingredients or dusting dry ingredients onto the gum mass before or as it exits the die plate section. The ingredients may include, but are not limited to flavors, colors, actives, high intensity sweeteners, bulking agents, water, wax, oil, fat, chocolate, or combinations thereof.

In an embodiment of the present invention, the aerated gum pieces may further include a coating applied by co-extrusion as the product leaves the apparatus (i.e., extruder). A coating layer may be coextruded on, around, or with the gum using a concentric or laminar die apparatus. The coextruded layers may be of the same or different densities and ingredient content. However, it is important that the coating material does not restrict the gum expansion or the maintenance of that expansion after cooling.

In an embodiment of the present invention, the aerated gum piece could have a coating applied by dipping or enrobing the gum pieces in a fluid material including sugar, sugar alcohol, wax, chocolate, flavors, colors, actives, high intensity sweeteners, or combinations thereof. The enrobing process could include dragging gum pieces through a pool of coating material or a curtain of coating material.

Supercritical Carbon Dioxide Addition: It is important that the supercritical carbon dioxide be introduced into the extruder and mixed into melted chewing gum ingredient mass as a supercritical fluid to ensure consistent production of expanded product. For this reason, it is important that the carbon dioxide is maintained at sufficient pressure to maintain this fluid state of mater. Preferably the carbon dioxide will be maintained at a pressure of at least 5500 kPa (800psi), and preferably at least 7000 kPa (1000 psi) in the injection system. On the other hand, it is important not to over-pressurize the extruder in order to prevent damaging the extruder. For this reason, it is desirable that the pressure of the molten chewing gum ingredient mass within the extruder not exceed 14000 kPa (2000 psi) for extended periods of time. Such excessive pressure within the extruder may be caused not only by excessive pressure in the injection system, but also by excessive ingredient feed rates or insufficient barrel temperature (which increases viscosity of the molten mass). The excessive pressure in the extruder could also be created by excessive torque caused by the viscosity and/or stickiness of the chewing gum ingredient mass mixed and melted in the extruder.

Carbon dioxide is normally supplied as a compressed gas at a pressure (∼800psi) well below that necessary to maintain it as a supercritical fluid. For this reason, it will normally be necessary to provide means for increasing the pressure of the carbon dioxide. This may be accomplished by the use of an SCF injection pump system such as that described in US 5,417,992 and US 5,120,559 which are hereby incorporated by reference in their entirety to the extent that they do not conflict with the description of the present invention. Injection pump systems which are adaptable for use in the present invention are available from American Leistritz, Somerville, NJ, USA. Alternatively, a high pressure pump, typically a syringe pump, capable of pressurizing the carbon dioxide to at least 3000psi can be used to convert carbon dioxide to the supercritical fluid (SCF) state and supply it to an injector inserted into the barrel of the extruder. Such pumps are available from Teledyne ISCO, Lincoln Nebraska, USA.

The SCF carbon dioxide injector itself includes a restriction device to control the flow rate of SCF CO₂ into the extruder. It should be carefully designed to minimize any internal dead space which could cause the carbon dioxide to expand as a gas. For small scale processing, it can be difficult to restrict the flow rate to the appropriate range while maintaining sufficient pressure to maintain the SCF state. An example of a small scale injector is shown in Fig. 4. A supply line 210 carries SCF CO₂ from the pump (not shown) through a fitting 220 screwed into the injector body 230. A threaded insert 240 is screwed into the injector body 230 by means of a hex socket 245. The threads of the insert are wrapped with a measured length of PTFE tape 250 to control the flow by allowing SCF carbon dioxide to leak past the threads. The SCF CO₂ then passes through an outlet channel 270 in an outlet fitting 260 and through outlet orifice 280 and into the extruder (not shown). By using more or less PTFE tape, lower or higher flow rates may be achieved respectively. It will be understood that the threads on fittings 220 and 260 are thoroughly sealed (for example by using a sufficient wrapping of PTFE tape) to prevent the escape of carbon dioxide. It can be difficult to achieve a sufficiently slow flow rate of carbon dioxide in small scale production, i.e. production rates of less than 0.5 kg/minute. One means of accomplishing this is through the use of an apparatus as illustrated in Figure 4. For larger scale operations, a precision orifice may be substituted for the taped insert, or multiple precision orifices may be built into the extruder.

The optimal supercritical carbon dioxide feed rate and pressure will depend on numerous factors specific to the composition of the chewing gum, the manufacturing equipment and the desired properties of the finished product. In general, it is important that the feed rate be sufficiently high to produce a density of less than 0.60 cc/g and preferably less than 0.50 cc/g in the expanded product, but not so high that it causes the product to burst upon exiting the extruder, unless a rough exterior texture is wanted on the finished low density chewing gum pieces. It has been found that an injection rate of 0.5 - 3.0 wt. % SCF carbon dioxide by weight of the chewing gum ingredients will produce satisfactorily expanded product. However, significantly higher or lower rates may also be used. Preferably, the injection rate will be at least 0.5 wt. %, or at least 1 wt. % of the chewing gum ingredients. Preferably, the injection rate will be less than 3 wt.% of the chewing gum ingredients. As a reasonable approximation, it may be assumed that 1 ml SCF carbon dioxide equals 1 g at typical extruder/injector temperatures.
The following examples are exemplary in nature and are in no way intended to limit the scope of the disclosure or of the claimed invention.

### EXAMPLES

A W&P (Coperion) ZSK25 co-rotating twin-screw extruder was configured as follows: L/D = 53, screw rate 60rpm; cutter speed 350rpm; set temperature for extruder zones 50, 80, 120, 120, 100, 80, 60, 55 and 55º C; set temperature for die 80ºC; die diameter 2.5mm; die L/D ¼. Dry ingredients were metered into an open port located over the first 3 L/D. A glycerin injector was located at at the first intensive mixing zone. A liquid flavor injector was located at the second intensive mixing zone The screw profile is given in Table 1. Note that lengths and L/D locations are approximate.

| Table 1 | | | |
|---|---|---|---|
| L/D Range | L/D Length | Element Description | Function |
| 0-27 | 27 | Conveying (decreasing pitch) | Conveying, melting, compression |
| 27 - 28.5 | 1.5 | Reverse Conveying | Sealing |
| 28.5 - 30 | 1.5 | Intense Mixing | Incorporation of CO₂ |
| 30 - 50 | 20 | Conveying (decreasing pitch) | Conveying, cooling |
| 50 - 51.5 | 1.5 | Intense Mixing | Mixing (liquid flavor injection) |
| 51.5-53 | 1.5 | Reverse Conveying | Sealing |

A supercritical fluid injection system consisting of a Carbon dioxide cylinder, a syringe pump (Teledyne model ISCO 260D) and an injector similar to that shown in Fig. 4 was installed to inject the SCF carbon dioxide. The flow rate was set to 1 ml/minute. Dry ingredient feeders and liquid ingredient injectors were set to feed ingredients in the appropriate proportions at a combined rate of 50g/minute.

A fly knife (cooled by a flow of ambient air) was positioned just after the die plate to cut the emerging extrudate into pieces. The pieces were then collected in a bin which was cooled by intermittent spray of CO₂ from a cylinder.

Samples were prepared according to Table 2.

| Table 2 | | | | |
|---|---|---|---|---|
| | Example 1 | Example 2 | Example 3 | Example 4 |
| Polyvinyl Acetate (Low MW) | 73.57 | 71.81 | 68.43 | 75.30 |
| Poly (vinyl acetate-co-vinyl laurate) (Vinnapas LL8880) | 4.60 | 4.49 | --- | --- |
| Styrene Butadiene Rubber | --- | --- | 10.27 | --- |
| Aspartame | 0.61 | 0.60 | 0.55 | 0.45 |
| Acesulfame K | 0.37 | 0.36 | 0.21 | 0.15 |
| Spray-dried Mint Flavor | 4.90 | 4.79 | 5.48 | 6.02 |
| Sorbitol | 1.23 | 2.99 | 2.74 | --- |
| Gum Arabic | 7.36 | 7.18 | 4.11 | 9.04 |
| Whey Protein Concentrate | 7.36 | 7.18 | 8.21 | 9.04 |
| Carnauba Wax | --- | 0.60 | --- | --- |
| Total | 100.00 | 100.00 | 100.00 | 100.00 |

The products were provided in the form of 1 cm. spheres similar to those shown in Fig. 1 and 2. Upon chewing, the product had a crispy initial bite and quickly chewed into a cud.

Additional product was made as before using the formulas in Table 3.

| Table 3 | | |
|---|---|---|
| | Example 5 | Example 6 |
| Polyvinyl Acetate (Low MW) | 74.69 | 66.54 |
| Poly (vinyl acetate-co-vinyl laurate) (Vinnapas LL8880) | 4.67 | 4.66 |
| Citric Acid | --- | 0.60 |
| Malic Acid | --- | 0.80 |
| Acesulfame K | 0.10 | 0.10 |
| Spray-dried Apple Flavor | 4.98 | 1.00 |
| Freeze-dried Apple Fruit Powder (Mercer) | 14.94 | 25.00 |
| Encapsulated Aspartame | --- | 0.50 |
| Carnauba Wax | 0.62 | 0.80 |
| Total | 100.00 | 100.00 |

Further product was made as before according to the formulas in Tables 4 and 5. The glycerin was injected into the extruder at a location after the SCF CO₂ injection point.

| Table 4 | | | | | |
|---|---|---|---|---|---|
| | Example 7 | Example 8 | Example 9 | Example 10 | Example 11 |
| Polyvinyl Acetate (Low MW) | 65.05 | 59.63 | 54.21 | 65.05 | 62.34 |
| Polyethylene Powder (Honeywell A-C® 9A) | -- | 5.42 | 10.84 | 4.07 | 4.07 |
| Poly (vinyl acetate-co-vinyl laurate) (Vinnapas LL8880) | 4.07 | 4.07 | 4.07 | -- | 2.71 |
| Aspartame | 0.86 | 0.86 | 0.86 | 0.86 | 0.86 |
| Sorbitol | 2.71 | 2.71 | 2.71 | 2.71 | 2.71 |
| Isomalt | 5.42 | 5.42 | 5.42 | 5.42 | 5.42 |
| Polydextrose | 5.42 | 5.42 | 5.42 | 5.42 | 5.42 |
| Spray Dried Flavor | 4.34 | 4.34 | 4.34 | 4.34 | 4.34 |
| Whey Protein | 5.42 | 5.42 | 5.42 | 5.42 | 5.42 |
| Carnauba Wax | 2.71 | 2.71 | 2.71 | 2.71 | 2.71 |
| Glycerin | 4.00 | 4.00 | 4.00 | 4.00 | 4.00 |
| Total | 100.00 | 100.00 | 100.00 | 100.00 | 100.00 |

| Table 5 | | | | | |
|---|---|---|---|---|---|
| | Example 12 | Example 13 | Example 14 | Example 15 | Example 16 |
| Polyvinyl Acetate (Low MW) | 66.41 | 65.05 | 62.34 | 62.34 | 62.34 |
| Polyethylene Powder (Honeywell A-C® 9A) | -- | -- | 2.71 | 1.36 | 2.71 |
| Poly (vinyl acetate-co-vinyl laurate) (Vinnapas B500/20VL) | 2.71 | 4.07 | 4.07 | 5.42 | -- |
| Poly (vinyl acetate-co-vinyl laurate) (Vinnapas B500/40VL) | -- | -- | -- | -- | 4.07 |
| Aspartame | 0.86 | 0.86 | 0.86 | 0.86 | 0.86 |
| Sorbitol | 2.71 | 2.71 | 2.71 | 2.71 | 2.71 |
| Isomalt | 5.42 | 5.42 | 5.42 | 5.42 | 5.42 |
| Polydextrose | 5.42 | 5.42 | 5.42 | 5.42 | 5.42 |
| Spray Dried Flavor | 4.34 | 4.34 | 4.34 | 4.34 | 4.34 |
| Whey Protein | 5.42 | 5.42 | 5.42 | 5.42 | 5.42 |
| Carnauba Wax | 2.71 | 2.71 | 2.71 | 2.71 | 2.71 |
| Glycerin | 4.00 | 4.00 | 4.00 | 4.00 | 4.00 |
| Total | 100.00 | 100.00 | 100.00 | 100.00 | 100.00 |

After aging for approximately two weeks, the density of the product of Example 7 was measured by filling a 250 ml graduated cylinder to approximately the 200ml mark with a weighed quantity of product. A measured volume of fine sand was added to cover the product and the graduated cylinder was tapped on the bench until a constant volume was obtained. The total volume was read and the volume of sand was subtracted to obtain the volume of product. The weight of the product was divided by the volume of product to obtain an envelope density. Four measurements were made resulting in an average density of 0.42 g/ml (SD = 0.01).

Additional batches of product were made according to the formulas in Table 6. The extruder was configured as before except that the SCF CO2 injection rate was set to 1.5 ml/min.

| | Example 17 | Example 18 | Example 19 |
|---|---|---|---|
| Polyvinyl Acetate (Low MW) | 69.73 | 64.36 | 64.35 |
| Poly (vinyl acetate-co-vinyl laurate) (Vinnapas LL8880) | 4.36 | 4.02 | 4.02 |
| Carnauba Wax | 2.44 | 2.68 | 2.68 |
| Aspartame | 0.93 | 1.07 | 1.61 |
| Sorbitol | 2.44 | 2.68 | 2.68 |
| Instant coffee | 2.32 | --- | --- |
| Ground French Roast Coffee | 2.32 | --- | --- |
| Gum Arabic | 1.05 | 2.68 | --- |
| Spray Dried Lemon Flavor | --- | 8.58 | --- |
| Spray Dried Dark Fruit Flavor | --- | --- | 11.26 |
| Adipic Acid | --- | 2.14 | 2.68 |
| Citric Acid | -- | 1.07 | --- |
| Whey Protein | 11.62 | 10.72 | 10.72 |
| Non-Dairy Creamer | 2.79 | --- | --- |
| Total | 100.00 | 100.00 | 100.00 |

The products of Examples 18 and 19 were coated as follows. A syrup was prepared by dissolving/dispersing 1445g xylitol, 66g Gum Arabic and 15.6 g Titanium Oxide in 476.4g water. A dry charge was prepared by dry blending 50 g spray dried lemon flavor, 20g citric acid and 2 g Acesulfame K.

A Robatech Glue Applicator was used to spray the syrup at a rate of approximately 15g/min onto 500g of the low density gum product which was rotated in an onion pan. The dry charge was added in increments to the pan. A total of 233.6g of syrup and 72g of dry charge were applied to the pellets to produce coated pieces having a 33% coating. The following procedure was used to apply the coating:
1. Spray syrup for 1min / dry air 4 min.
2. Spray syrup for 1min / dry air 4 min.
3. Spray syrup for 1.5min/Apply dry charge 20g/air dry 10min.
4. Spray syrup for 3.5 min/Apply dry charge 20g/air dry 5min.
5. Spray syrup for 1.5min /Apply remainder of the dry charge/air dry 7min.
6. Spray syrup for 1.5 min./air dry 11 min for polishing
7. Spray syrup for 2 min /air dry 10min.
8. Spray syrup for 1.5 min. - Product was wet and surface was not smooth
9. Transfer product to a smaller stainless steel pan coater (dia ∼ 1ft)
10. Rotate product very slowly overnight in the pan coater.
After rotating in the pan overnight, the product surface was shinny and completely dried.

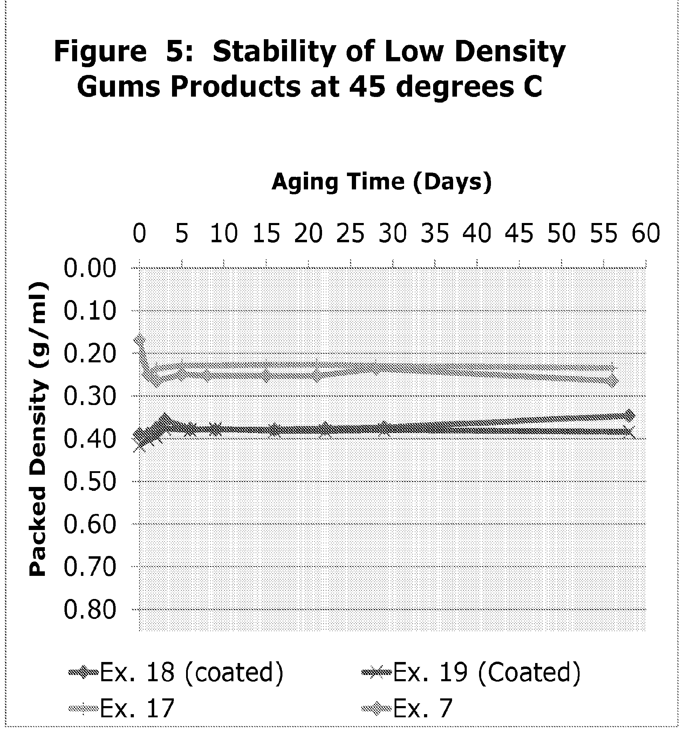

Samples of uncoated aerated Examples 7 and 17, and samples of coated aerated Examples 18 and 19, were stored in vacuum packaging at 45°C. The samples were evaluated over 56 - 58 days for density changes. Note: The density of the coated samples (i.e., Examples 18 and 19) included the coating mass and volume. The density over time results shown in Figure 5 demonstrate that after a few days the density of the gum stabilized and remained constant over the remainder of the test period for all of the samples.

## Claims

1. A chewing gum comprising at least 50 wt. % polymer, less than 40 wt. % of bulking agent and filler combined wherein the chewing gum has an envelope density of less than 0.60 g/cc.

2. The chewing gum of claim 1 wherein the chewing gum comprises at least 60 wt. % polymer, preferably at least 70 wt. % polymer.

3. The chewing gum of any one of the preceding claims wherein the polymer comprises a hydrophilic polymer; and/or wherein the polymer comprises a polymer having a Tg greater than 30 °C.

4. The chewing gum of any one of the preceding claims wherein the polymer comprises a food grade polymer, such as polyvinyl acetate, poly(vinyl acetate-co-vinyl laurate), or combinations thereof.

5. The chewing gum of any one of the preceding claims further comprising polyethylene.

6. The chewing gum of any one of the preceding claims comprising 0 to 5% of at least one of a bulking agent and a filler.

7. The chewing gum of any one of preceding claims further comprising at least one bulking agent or filler selected from the group consisting of sugars, sugar alcohols, fruit powders, calcium carbonate, talc, insoluble fiber, cellulose, or combinations thereof.

8. The chewing gum of any one of the preceding claims further comprising a flavour, preferably wherein the flavor is encapsulated; and/or
a high- intensity sweetener, preferably wherein the high intensity sweetener is encapsulated.

9. The chewing gum of any one of the preceding claims wherein the chewing gum further comprises a hydrocolloid, a protein or a combination thereof.

10. The chewing gum of any one of the preceding claims further comprising a lubricant such as is paraffin wax, microcrystalline wax, beeswax, carnauba wax, tallow, hydrogenated tallow, fully hydrogenated vegetable oil, partially hydrogenated vegetable oil, or combinations thereof.

11. The chewing gum of any one of the preceding claims wherein the envelope density of the chewing gum is less than 0.50 g/cc, preferably less than 0.45 g/cc, especially is less than 0.40 g/cc.

12. The chewing gum of claim 11 wherein the envelope density of the chewing gum is greater than 0.20 g/cc.

13. The chewing gum of any preceding claim wherein the chewing gum has a coating covering at least part of the outer surface of the chewing gum, preferably wherein the coating comprises sugar, sugar alcohol, wax, chocolate, or combinations thereof; wherein said coating optionally comprises flavors, colors, actives, acids, salt, high intensity sweeteners, or combinations thereof.

14. A method of making an aerated chewing gum comprising the steps of; introducing ingredients comprising at least a polymer into an extruder;
introducing supercritical fluid carbon dioxide into the extruder;
operating the extruder to mix the ingredients and the supercritical carbon dioxide; and extruding the mixture to produce an aerated chewing gum; and optionally cutting the extruded mixture into pieces prior to cooling the cut pieces.

15. The method of claim 14 wherein the polymer is a food grade polymer, such as polyvinyl acetate, poly(vinyl acetate-co-vinyl laurate), polyethylene, or combinations thereof.

16. The method of claim 14 or 15 wherein the ingredients further comprise at least one of a stabilizing agent, a bulking agent, a filler and a lubricant.

17. The method of claim 14 further comprising the step of coating the pieces after cooling, such as coating with a sugar or a sugar alcohol coating.

18. The method of any one of claims 14 to 17 wherein the supercritical carbon dioxide is introduced at a pressure of at least 5500 kPa, preferably at least 7000 kPa.

19. The method of any one of claims 14 to 18 wherein the supercritical carbon dioxide is introduced at a rate of at least 0.5 wt. % by weight of the ingredients, preferably at least 1.0 wt. % by weight of the ingredients.

20. The method of any one of claims 14 to 19 wherein the supercritical carbon dioxide is introduced at a rate of less than 3 wt. % by weight of the ingredients.

21. The method of any one of claims 14 to 20 in which the chewing gum has an envelope density of less than 0.60 g/cc, exclusive of any coating on the chewing gum, preferably of less than 0.50 g/cc, exclusive of any coating on the chewing gum, especially of less than 0.45 g/cc, exclusive of any coating on the chewing gum.

22. The method of any one of claims 14 to 21 wherein the chewing gum comprises at least 50 wt. % polymer.

23. The method of any one of claims 14 to 22 wherein the chewing gum comprises less than 40 wt. % bulking agent and filler combined.

## Patentansprüche

1. Kaugummi, der zumindest 50 Gew.-% Polymer, weniger als 40 Gew.-% von Füllstoff und Füller kombiniert umfasst, wobei der Kaugummi eine Hülldichte von weniger als 0,60 g/cm³ aufweist.

2. Kaugummi nach Anspruch 1, wobei der Kaugummi zumindest 60 Gew.-% Polymer, bevorzugt zumindest 70 Gew.-% Polymer umfasst.

3. Kaugummi nach einem der vorstehenden Ansprüche, wobei das Polymer ein hydrophiles Polymer umfasst und/oder wobei das Polymer ein Polymer mit einer Tg größer als 30 °C umfasst.

4. Kaugummi nach einem der vorstehenden Ansprüche, wobei das Polymer ein lebensmittelechtes Polymer, wie etwa Polyvinylacetat, Poly(vinylacetat-co-vinyllaurat) oder Kombinationen davon umfasst.

5. Kaugummi nach einem der vorstehenden Ansprüche, der weiter Polyethylen umfasst.

6. Kaugummi nach einem der vorstehenden Ansprüche, der 0 bis 5 % von zumindest einem von einem Füllstoff und einem Füller umfasst.

7. Kaugummi nach einem der vorstehenden Ansprüche, der weiter zumindest einen Füllstoff oder Füller ausgewählt aus der Gruppe, bestehend aus Zucker, Zuckeralkoholen, Fruchtpulvern, Calciumcarbonat, Talk, unlöslicher Faser, Zellulose oder Kombinationen davon umfasst.

8. Kaugummi nach einem der vorstehenden Ansprüche, der weiter ein Aroma umfasst, wobei das Aroma bevorzugt verkapselt ist; und/oder einen hochintensiven Süßstoff, wobei der hochintensive Süßstoff bevorzugt verkapselt ist.

9. Kaugummi nach einem der vorstehenden Ansprüche, wobei der Kaugummi weiter ein Hydrokolloid, ein Protein oder eine Kombination davon umfasst.

10. Kaugummi nach einem der vorstehenden Ansprüche, der weiter ein Schmiermittel, wie etwa Paraffinwachs, mikrokristallines Wachs, Bienenwachs, Karnaubawachs, Talg, hydrierten Talg, vollhydriertes Pflanzenöl, teilhydriertes Pflanzenöl oder Kombinationen davon umfasst.

11. Kaugummi nach einem der vorstehenden Ansprüche, wobei die Hülldichte des Kaugummis geringer als 0,5 g/cm³, bevorzugt geringer als 0,45 g/cm³ ist, wobei sie insbesondere geringer als 0,40 g/cm³ ist.

12. Kaugummi nach Anspruch 11, wobei die Hülldichte des Kaugummis größer als 0,20 g/cm³ ist.

13. Kaugummi nach einem der vorstehenden Ansprüche, wobei der Kaugummi einen Überzug aufweist, der zumindest einen Teil der Außenfläche des Kaugummis überzieht, wobei der Überzug bevorzugt Zucker, Zuckeralkohol, Wachs, Schokolade oder Kombinationen davon umfasst; wobei der Überzug wahlweise Aromen, Farben, Wirkstoffe, Säuren, Salz, hochintensive Süßstoffe oder Kombinationen davon umfasst.

14. Verfahren zur Herstellung eines mit Kohlendioxid angereicherten Kaugummis, umfassend die Schritte von;
Einbringen von Zutaten, die zumindest ein Polymer umfassen, in einen Extruder;
Einbringen von überkritischem flüssigem Kohlendioxid in den Extruder;
Betreiben des Extruders zum Mischen der Zutaten und des überkritischen Kohlendioxids; und
Extrudieren des Gemisches zum Herstellen eines mit Kohlendioxid angereicherten Kaugummis; und wahlweise Schneiden des extrudierten Gemisches in Stücke vor einem Kühlen der geschnittenen Stücke.

15. Verfahren nach Anspruch 14, wobei das Polymer ein lebensmittelechtes Polymer, wie etwa Polyvinylacetat, Poly(vinylacetat-co-vinyllaurat), Polyethylen oder Kombinationen davon ist.

16. Verfahren nach Anspruch 14 oder 15, wobei die Zutaten weiter zumindest eines von einem Stabilisierungsmittel, einem Füllstoff, einem Füller und einem Schmiermittel umfassen.

17. Verfahren nach Anspruch 14, das weiter den Schritt von Beschichten der Stücke nach dem Kühlen umfasst, wie etwa Beschichten mit einer Zucker- oder einer Zuckeralkoholbeschichtung.

18. Verfahren nach einem der Ansprüche 14 bis 17, wobei das überkritische Kohlendioxid bei einem Druck von zumindest 5500 kPa, bevorzugt zumindest 7000 kPa eingebracht wird.

19. Verfahren nach einem der Ansprüche 14 bis 18, wobei das überkritische Kohlendioxid mit einer Menge von zumindest 0,5 Gew.-% der Zutaten, bevorzugt zumindest 1,0 Gew.-% der Zutaten eingebracht wird.

20. Verfahren nach einem der Ansprüche 14 bis 19, wobei das überkritische Kohlendioxid mit einer Menge von weniger als 3 Gew.-% der Zutaten eingebracht wird.

21. Verfahren nach einem der Ansprüche 14 bis 20, bei dem der Kaugummi eine Hülldichte von weniger als 0,60 g/cm³ exklusive einer Beschichtung auf dem Kaugummi, bevorzugt von weniger als 0,50 g/cm³ exklusive einer Beschichtung auf dem Kaugummi, insbesondere von weniger als 0,45 g/cm³ exklusive einer Beschichtung auf dem Kaugummi aufweist.

22. Verfahren nach einem der Ansprüche 14 bis 21, wobei der Kaugummi zumindest 50 Gew.-% Polymer umfasst.

23. Verfahren nach einem der Ansprüche 14 bis 22, wobei der Kaugummi weniger als 40 Gew.-% Füllstoff und Füller kombiniert umfasst.

## Revendications

1. Gomme à mâcher comprenant au moins 50% en poids de polymère, moins de 40 % en poids d'un diluant et d'une charge combinés, dans laquelle la gomme à mâcher a une densité d'enveloppe inférieure à 0,60 g/cm³.

2. Gomme à mâcher selon la revendication 1 dans laquelle la gomme à mâcher comprend au moins 60 % en poids de polymère, de préférence au moins 70 % en poids de polymère.

3. Gomme à mâcher selon l'une quelconque des revendications précédentes dans laquelle le polymère comprend un polymère hydrophile; et/ou dans laquelle le polymère comprend un polymère ayant une Tg supérieure à 30 °C.

4. Gomme à mâcher selon l'une quelconque des revendications précédentes dans laquelle le polymère comprend un polymère de qualité alimentaire, tel que l'acétate de polyvinyle, le poly(acétate de vinyle-co-laurate de vinyle), ou des combinaisons de ceux-ci.

5. Gomme à mâcher selon l'une quelconque des revendications précédentes dans laquelle le polymère comprend en outre du polyéthylène.

6. Gomme à mâcher selon l'une quelconque des revendications précédentes comprenant 0 à 5 % d'au moins un parmi un diluant et une charge.

7. Gomme à mâcher selon l'une quelconque des revendications précédentes comprenant en outre au moins un diluant ou une charge sélectionné dans le groupe constitué de sucres, de polyols, de poudres de fruits, de carbonate de calcium, de talc, de fibre insoluble, de cellulose, ou de combinaisons de ceux-ci.

8. Gomme à mâcher selon l'une quelconque des revendications précédentes comprenant en outre un arôme, de préférence dans laquelle l'arôme est encapsulé ; et/ou
un édulcorant haute intensité, de préférence dans laquelle l'édulcorant haute intensité est encapsulé.

9. Gomme à mâcher selon l'une quelconque des revendications précédentes dans laquelle la gomme à mâcher comprend en outre un hydrocolloïde, une protéine ou une combinaison de ceux-ci.

10. Gomme à mâcher selon l'une quelconque des revendications précédentes comprenant en outre un lubrifiant tel que la cire de paraffine, la cire microcristalline, la cire d'abeille, la cire de carnauba, le suif, le suif hydrogéné, une huile végétale totalement hydrogénée, une huile végétale partiellement hydrogénée, ou des combinaisons de ceux-ci.

11. Gomme à mâcher selon l'une quelconque des revendications précédentes dans laquelle la densité d'enveloppe de la gomme à mâcher est inférieure à 0,50 g/cm³, de préférence inférieure à 0,45 g/cm³, notamment inférieure à 0,40 g/cm³.

12. Gomme à mâcher selon la revendication 11 dans laquelle la densité d'enveloppe de la gomme à mâcher est supérieure à 0,20 g/cm³.

13. Gomme à mâcher selon l'une quelconque des revendications précédentes dans laquelle la gomme à mâcher a un revêtement revêtant au moins une partie de la surface extérieure de la gomme à mâcher, de préférence dans laquelle le revêtement comprend du sucre, un polyol, de la cire, du chocolat, ou des combinaisons de ceux-ci ; dans laquelle ledit revêtement comprend facultativement des arômes, des colorants, des principes actifs, des acides, du sel, des édulcorants haute intensité, ou des combinaisons de ceux-ci.

14. Procédé de préparation d'une gomme à mâcher aérée comprenant les étapes suivantes ;
introduction d'ingrédients comprenant au moins un polymère dans une extrudeuse ;
introduction de dioxyde de carbone fluide supercritique dans l'extrudeuse ;
actionnement de l'extrudeuse pour mélanger les ingrédients et le dioxyde de carbone supercritique; et extrusion du mélange pour produire une gomme à mâcher aérée ; et facultativement découpe du mélange extrudé en morceaux avant de refroidir les morceaux découpés.

15. Procédé selon la revendication 14 dans lequel le polymère est un polymère de qualité alimentaire, tel que l'acétate de polyvinyle, le poly(acétate de vinyle-co-laurate de vinyle), le polyéthylène, ou des combinaisons de ceux-ci.

16. Procédé selon la revendication 14 ou 15, dans lequel les ingrédients comprennent en outre au moins l'un d'un agent stabilisant, d'un diluant, d'une charge et d'un lubrifiant.

17. Procédé selon la revendication 14, comprenant en outre l'étape de revêtement des morceaux après le refroidissement, par exemple le revêtement avec un sucre ou un revêtement de polyol.

18. Procédé selon l'une quelconque des revendications 14 à 17, dans lequel le dioxyde de carbone supercritique est introduit à une pression d'au moins 5 500 kPa, de préférence d'au moins 7 000 kPa.

19. Procédé selon l'une quelconque des revendications 14 à 18 dans lequel le dioxyde de carbone supercritique est introduit à un taux d'au moins 0,5 % en poids des ingrédients, de préférence d'au moins 1,0 % en poids des ingrédients.

20. Procédé selon l'une quelconque des revendications 14 à 19 dans lequel le dioxyde de carbone supercritique est introduit à un taux inférieur à 3 % en poids des ingrédients.

21. Procédé selon l'une quelconque des revendications 14 à 20 dans lequel la gomme à mâcher a une densité d'enveloppe inférieure à 0,60 g/cm³, en excluant tout revêtement sur la gomme à mâcher, de préférence inférieure à 0,50 g/cm³, en excluant tout revêtement sur la gomme à mâcher, notamment inférieure à 0,45 g/cm³, en excluant tout revêtement sur la gomme à mâcher.

22. Procédé selon l'une quelconque des revendications 14 à 21 dans lequel la gomme à mâcher comprend au moins 50 % en poids de polymère.

23. Procédé selon l'une quelconque des revendications 14 à 22 dans lequel la gomme à mâcher comprend moins de 40 % en poids de diluant et de charge combinés.
